# EUROPEAN PATENT APPLICATION

(11) **EP 2 672 615 A2**
(43) Date of publication of application: **11.12.2013**
(21) Application number: 13170088.2
(22) Date of filing: 31.05.2013
(51) Int. Cl.: H02K 9/00

(54) **Nitrogen-cooled dynamoelectric machine system and related method**

(30) Priority: 04.06.2012 US 201213488023
(71) Applicant: General Electric Company, Schenectady, New York 12345 (US)
(72) Inventor: Mazumder, Indrajit, 560066 Bangalore, Karnataka (IN); John, Joseph, 560066 Banagalore, Karnataka (IN); Rajan, Sudhahar, 560066 Bangalore, Karnataka (IN); Saha, Rajarshi, 560066 Banagalore, Karnataka (IN)
(74) Representative: Cleary, Fidelma

(57) **Abstract**

Various embodiments of the invention include systems and methods for cooling a dynamoelectric machine 18. In some embodiments, a system is disclosed including: at least one of a nitrogen separation unit (NSU) 4 or an air separation unit (ASU) 3 for extracting nitrogen from an inlet air source; a nitrogen expander 8 fluidly connected with the at least one of the NSU or the ASU, the nitrogen expander for expanding the extracted nitrogen; and a dynamoelectric machine 18 fluidly connected with the nitrogen expander 8, the dynamoelectric machine 18 configured to receive the expanded nitrogen for cooling the dynamoelectric machine 18.

## Description

The subject matter disclosed herein relates to dynamoelectric machines. More particularly, aspects of the invention relate to cooling a dynamoelectric machine.

Dynamoelectric machines such as electric generators and motors are conventionally cooled using a mixture of air and/or hydrogen. The air -based coolants can be inefficient in cooling some dynamoelectric machines during operation. Additionally, hydrogen-based coolants can be undesirably expensive due to safety concerns when they are utilized in a high-pressure environment such as a dynamoelectric machine casing.

Various embodiments of the invention include systems and methods for cooling a dynamoelectric machine. In some embodiments, a system is disclosed including: at least one of a nitrogen separation unit (NSU) or an air separation unit (ASU) for extracting nitrogen from an inlet air source; a nitrogen expander fluidly connected with the at least one of the NSU or the ASU, the nitrogen expander for expanding the extracted nitrogen; and a dynamoelectric machine fluidly connected with the nitrogen expander, the dynamoelectric machine configured to receive the expanded nitrogen for cooling the dynamoelectric machine.

A first aspect of the invention includes a system having: at least one of a nitrogen separation unit (NSU) or an air separation unit (ASU) for extracting nitrogen from an inlet air source; a nitrogen expander fluidly connected with the at least one of the NSU or the ASU, the nitrogen expander for expanding the extracted nitrogen; and a dynamoelectric machine fluidly connected with the nitrogen expander, the dynamoelectric machine configured to receive the expanded nitrogen for cooling the dynamoelectric machine.

A second aspect of the invention includes a method including: extracting nitrogen from an inlet air source; expanding the extracted nitrogen; and cooling a dynamoelectric machine using the expanded, extracted nitrogen.

A third aspect of the invention includes a system having: at least one of a nitrogen separation unit (NSU) or an air separation unit (ASU) for extracting nitrogen from inlet air; a nitrogen expander fluidly connected with the at least one of the NSU or the ASU, the nitrogen expander for expanding the extracted nitrogen; a dynamoelectric machine fluidly connected with the nitrogen expander, the dynamoelectric machine configured to receive the expanded nitrogen for cooling the dynamoelectric machine; and a control system operably connected to the NSU, the nitrogen expander and the dynamoelectric machine, the control system configured to perform the following: monitor a temperature indicator of the dynamoelectric machine; and modify an amount of nitrogen extracted from the inlet air source in response to determining the temperature indicator deviates from a predetermined threshold.

These and other features of this invention will be more readily understood from the following detailed description of the various aspects of the invention taken in conjunction with the accompanying drawings that depict various embodiments of the invention, in which:
FIG. 1 shows a schematic diagram of a system according to various embodiments of the invention.
FIG. 2 shows a flow diagram illustrating processes according to various embodiments of the invention.

It is noted that the drawings of the invention are not necessarily to scale. The drawings are intended to depict only typical aspects of the invention, and therefore should not be considered as limiting the scope of the invention. In the drawings, like numbering represents like elements between the drawings.

As noted, the subject matter disclosed herein relates to dynamoelectric machines. More particularly, aspects of the invention relate to cooling a dynamoelectric machine.

Conventional approaches for cooling dynamoelectric machines (e.g., electric generators or motors) can be inefficient in cooling these machines, and in some cases, can be undesirably costly. Aspects of the invention utilize a system which effectively isolates nitrogen from an inlet air source (e.g., ambient air, isolated using an air separation unit (ASU); or an exhaust flue gas from a conventional boiler, isolated using a nitrogen separation unit (NSU)), and provides that isolated (or, extracted) nitrogen as a coolant for a dynamoelectric machine.

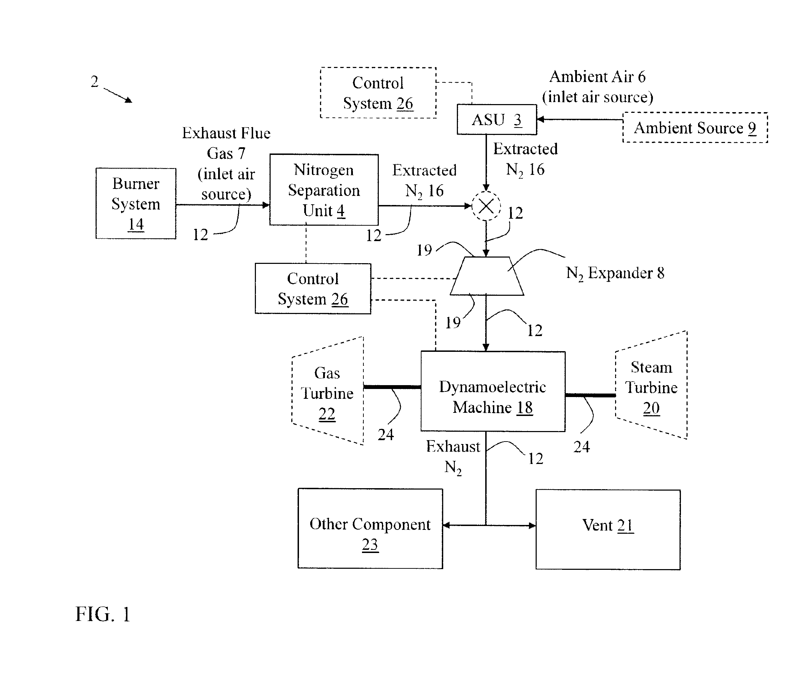

Turning to FIG. 1, a schematic depiction of a system 2 is shown according to various embodiments of the invention. It is understood that the system 2 shown and described includes components (and associated connections) which may aid in understanding of the invention disclosed herein. The system 2 may omit particular components which are not necessary in the understanding of the invention disclosed herein. In some cases, the system 2 can include: at least one of an air separation unit (ASU) 3 or a nitrogen separation unit (NSU) 4 for extracting nitrogen from an inlet air source (e.g., ambient air 6 or an exhaust flue gas 7 from a burner system 14) to produce an extracted nitrogen 16; a nitrogen (N₂) expander 8 fluidly connected with the NSU 4, the nitrogen expander 8 for expanding the extracted nitrogen; and a dynamoelectric machine 10 fluidly connected with the nitrogen expander 8, the dynamoelectric machine 10 configured to receive the expanded nitrogen for cooling the dynamoelectric machine 10. As shown herein, the inlet air source (e.g., ambient air 3 or exhaust flue gas 7) can be obtained (e.g., transported via a conduit 12) from one of an ambient source 9 or a burner system 14, respectively. The ambient source 9 can include air external to the components shown and described herein. The burner system 14 can include any conventional burner configured to burn a combustion product, e.g., for transferring heat to a working fluid.

The ASU 3 can include conventional nitrogen separation components for separating nitrogen from ambient air, in particular, air being composed primarily of oxygen (O₂) and nitrogen (N₂). The ASU 3 includes conventional components fro separating the nitrogen from the oxygen.

The NSU 4 can include any conventional nitrogen separation components for separating nitrogen (N₂) from the exhaust flue gas 6. In some cases, the exhaust flue gas 6 can include nitrogen (N₂) and carbon dioxide (CO₂), and in these cases, the NSU 4 is designed to separate nitrogen from the carbon dioxide.

After extracting the nitrogen from either the oxygen (in the case of ambient air 6) or the CO₂ (in the case of the exhaust flue gas 7), the extracted nitrogen 16 is provided to the nitrogen expander 8 to allow that nitrogen 16 to cool via physical expansion. That is, the extracted nitrogen 16 enters the nitrogen expander 8 at a first end 19 having a first width, and exits at a second end 21 having a second width (greater than the first width). Through physical expansion, the extracted nitrogen 6 loses pressure, and thus, heat, thereby reducing its temperature.

The extracted, now expanded, nitrogen is then provided to the dynamoelectric machine 10 for cooling components within the dynamoelectric machine 10 (e.g., coils, rotor and stator body, cavities, etc.).

Following use as a coolant, the nitrogen is exhausted from the dynamoelectric machine 18 and provided to one of several locations. In one embodiment, the exhausted nitrogen is provided to a vent 21, which can lead to the surrounding atmosphere. In another embodiment, the exhausted nitrogen is provided to another component 23 within a power generation system, which can include, for example, a purge unit for at least one of a gas turbine or dynamoelectric machine, a cooling system for gas turbine components, a nitrous oxide (NOx) abatement system, a compartment ventilation system, a storage system, etc.

In various aspects of the invention, the dynamoelectric machine 18 is operably connected (e.g., physically coupled) to at least one steam turbine 20 and/or at least one gas turbine 22 via one or more common or distinct shaft(s) 24. The steam turbine 20 and gas turbine 22 can include any conventional turbine (or compressor) device known in the art.

As shown, the system 2 can also include a control system 26 (which may include a centralized or distributed control system) which is operably connected (e.g., electrically and/or mechanically connected) to the NSU4, the nitrogen expander 8 and the dynamoelectric machine 18. The control system 26 can include any electrical, mechanical and/or electro-mechanical control mechanism for actuating any of the ASU 3, NSU 4, the nitrogen expander 8 or the dynamoelectric machine 18. The control system 26 can include any form of programmable computer system, which may include any conventional hardware and/or software for performing the actions described herein.

In various embodiments, the control system 26 is configured to perform the following: monitor a temperature indicator of the dynamoelectric machine (e.g., a temperature of a section of the dynamoelectric machine, either inside or outside of the casing); and modify an amount of nitrogen extracted from the inlet air source (either ambient air 6 or exhaust flue gas 7) in response to determining the temperature indicator deviates from a predetermined threshold. The predetermined threshold can be based upon one or more operating parameters of the dynamoelectric machine 18, such as a desirable operating temperature of the dynamoelectric machine 18.

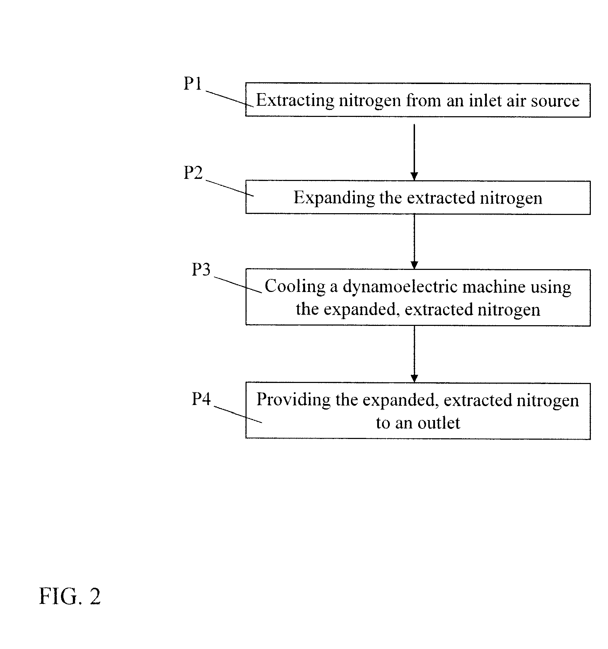

Turning to FIG. 2, a flow diagram is shown illustrating processes according to various embodiments of the invention. In this example, a method can include the following processes:
Process P1: Extracting nitrogen from the inlet air source, e.g., ambient air 6 via the ASU 3 or exhaust flue gas 7 via the NSU 4;
Process P2: Expanding the extracted nitrogen (e.g., extracted nitrogen 16), e.g., via a nitrogen expander 8;
Process P3: Cooling a dynamoelectric machine (e.g., dynamoelectric machine 18) using the expanded, extracted nitrogen; and
Process P4: Providing the expanded, extracted nitrogen to an outlet (e.g., an outlet of the dynamoelectric machine 18 (e.g., an outlet to ambient or to another component in the power generation system).

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. It is further understood that the terms "front" and "back" are not intended to be limiting and are intended to be interchangeable where appropriate.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system comprising:
   at least one of a nitrogen separation unit (NSU) or an air separation unit (ASU) for extracting nitrogen from an inlet air source;
   a nitrogen expander fluidly connected with the at least one of the NSU or the ASU, the nitrogen expander for expanding the extracted nitrogen; and
   a dynamoelectric machine fluidly connected with the nitrogen expander, the dynamoelectric machine configured to receive the expanded nitrogen for cooling the dynamoelectric machine.
2. The system of clause 1, further comprising at least one steam turbine operably connected to the dynamoelectric machine.
3. The system of clause 1 or clause 2, further comprising at least one gas turbine operably connected to the dynamoelectric machine.
4. The system of any preceding clause, wherein the dynamoelectric machine further includes a nitrogen outlet for exhausting the expanded nitrogen after the cooling of the dynamoelectric machine.
5. The system of any preceding clause, wherein the nitrogen expander is configured to cool the extracted nitrogen before providing the expanded nitrogen to the dynamoelectric machine.
6. The system of any preceding clause, wherein the inlet air source includes an exhaust flue gas having nitrogen and carbon dioxide.
7. The system of any preceding clause, wherein the inlet air source includes ambient air.
8. A method comprising:
   extracting nitrogen from an inlet air source;
   expanding the extracted nitrogen; and
   cooling a dynamoelectric machine using the expanded, extracted nitrogen.
9. The method of any preceding clause, further comprising providing the expanded, extracted nitrogen to an exhaust vent after the cooling of the dynamoelectric machine.
10. The method of any preceding clause, further comprising providing the expanded, extracted nitrogen to another component distinct from the dynamoelectric machine after the cooling of the dynamoelectric machine.
11. The method of any preceding clause, wherein extracting includes separating the nitrogen from one of ambient air or an exhaust flue gas.
12. The method of any preceding clause, wherein the expanding of the extracted nitrogen includes cooling the extracted nitrogen in a nitrogen expander.
13. The method of any preceding clause, wherein extracting includes separating the nitrogen from carbon dioxide in the inlet air source.
14. A system comprising:
   at least one of a nitrogen separation unit (NSU) or an air separation unit (ASU) for extracting nitrogen from an inlet air source;
   a nitrogen expander fluidly connected with the at least one of the NSU or the ASU, the nitrogen expander for expanding the extracted nitrogen;
   a dynamoelectric machine fluidly connected with the nitrogen expander, the dynamoelectric machine configured to receive the expanded nitrogen for cooling the dynamoelectric machine; and
   a control system operably connected to the at least one of the NSU or the ASU, the nitrogen expander and the dynamoelectric machine, the control system configured to perform the following:
   monitor a temperature indicator of the dynamoelectric machine; and
   modify an amount of nitrogen extracted from the inlet air source in response to determining the temperature indicator deviates from a predetermined threshold.
15. The system of any preceding clause, further comprising at least one steam turbine operably connected to the dynamoelectric machine.
16. The system of any preceding clause, further comprising at least one gas turbine operably connected to the dynamoelectric machine.
17. The system of any preceding clause, wherein the dynamoelectric machine further includes a nitrogen outlet for exhausting the expanded nitrogen after the cooling of the dynamoelectric machine.
18. The system of any preceding clause, wherein the nitrogen expander is configured to cool the extracted nitrogen from the inlet air source before providing the expanded nitrogen to the dynamoelectric machine.
19. The system of any preceding clause, wherein the inlet air source includes an exhaust flue gas having nitrogen and carbon dioxide and the NSU extracts the nitrogen from the exhaust flue gas.
20. The system of any preceding clause, wherein the inlet air source includes ambient air and the ASU extracts the nitrogen from the ambient air.

## Claims

1. A system comprising:
at least one of a nitrogen separation unit (NSU) (4) or an air separation unit (ASU) (3) for extracting nitrogen from an inlet air source (6);
a nitrogen expander (8) fluidly connected with the at least one of the NSU (4) or the ASU (3), the nitrogen expander for expanding the extracted nitrogen; and
a dynamoelectric machine (18) fluidly connected with the nitrogen expander (8), the dynamoelectric machine configured to receive the expanded nitrogen for cooling the dynamoelectric machine.

2. The system of claim 1, further comprising at least one steam turbine operably connected to the dynamoelectric machine.

3. The system of claim 1 or claim 2, further comprising at least one gas turbine operably connected to the dynamoelectric machine.

4. The system of any preceding claim, wherein the dynamoelectric machine further includes a nitrogen outlet for exhausting the expanded nitrogen after the cooling of the dynamoelectric machine.

5. The system of any preceding claim, wherein the nitrogen expander is configured to cool the extracted nitrogen before providing the expanded nitrogen to the dynamoelectric machine.

6. The system of any preceding claim, wherein the inlet air source includes an exhaust flue gas having nitrogen and carbon dioxide.

7. The system of any preceding claim, wherein the inlet air source includes ambient air.

8. A system comprising:
a system according to any preceding claim and;
a control system operably connected to the at least one of the NSU or the ASU, the nitrogen expander and the dynamoelectric machine, the control system configured to perform the following:
monitor a temperature indicator of the dynamoelectric machine; and
modify an amount of nitrogen extracted from the inlet air source in response to determining the temperature indicator deviates from a predetermined threshold.

9. A method comprising:
extracting nitrogen from an inlet air source;
expanding the extracted nitrogen; and
cooling a dynamoelectric machine using the expanded, extracted nitrogen.

10. The method of claim 9, further comprising providing the expanded, extracted nitrogen to an exhaust vent after the cooling of the dynamoelectric machine.

11. The method of claim 9 or claim 10, further comprising providing the expanded, extracted nitrogen to another component distinct from the dynamoelectric machine after the cooling of the dynamoelectric machine.

12. The method of any of claims 9 to 11, wherein extracting includes separating the nitrogen from one of ambient air or an exhaust flue gas.

13. The method of any of claims 9 to 12, wherein the expanding of the extracted nitrogen includes cooling the extracted nitrogen in a nitrogen expander.

14. The method of any of claims 9 to 13, wherein extracting includes separating the nitrogen from carbon dioxide in the inlet air source.
